# EUROPEAN PATENT SPECIFICATION

(11) **EP 2 235 914 B1**
(45) Date of publication and mention of the grant of the patent: **25.02.2015**
(21) Application number: 07857139.5
(22) Date of filing: 28.12.2007
(51) Int. Cl.: H04Q 9/00, H04W 4/00, H04W 4/02, H04L 29/08

(54) **METHOD AND SYSTEM FOR MANAGING A NETWORK OF DISTRIBUTED ENTITIES**
VERFAHREN UND SYSTEM ZUR VERWALTUNG EINES NETZWERKS VERTEILTER ENTITÄTEN
PROCÉDÉ ET SYSTÈME DE GESTION D'UN RÉSEAU D'ENTITÉS DISTRIBUÉES

(43) Date of publication of application: 06.10.2010
(73) Proprietor: Telecom Italia S.p.A., 20123 Milano (IT)
(72) Inventor: CAIRE, Giovanni, I-10148 Torino (IT); GOTTA, Danilo, I-10148 Torino (IT); LONG, Daniela, I-10148 Torino (IT); TRUCCO, Tiziana, I-10148 Torino (IT); UGHETTI, Marco, I-10148 Torino (IT)
(74) Representative: Zerbi, Guido Maria
(86) International application number: PCT/EP2007/011446
(87) International publication number: WO 2009/083019

(56) References cited:
- EP-A- 1 655 695
- WO-A-2006/111782
- US-A1- 2004 002 305
- US-A1- 2006 094 405

## Description

### Field of the invention

The present invention relates to the telecommunication field and more particularly to a system architecture for managing a network of distributed entities.

### Background of the Invention

The recent widespread diffusion of proximity communication protocols, such as RFID, ZIGBee, Bluetooth, WLAN introduced a great availability of distributed and sometimes fragmented information. Some of these communication protocols make use of items with very limited processing power and capability. RFID Tags as an example are in most cases only simple transponders without any autonomous communication function. In any case the communications with all these terminals are normally limited to a local range and are usually point-to-point transactions. State of the art network architectures are not organised to exploit this potentially huge and widespread coverage.

US2004/0002305 A1 describes a system in which applications on mobile terminals are invoked by information received from distributed RFID tags.

WO 2005/018249 discloses system architecture for managing a telecommunication network which includes a community of agents coordinating a plurality of proxy interfaces in order to support distributed management functionalities of a big number of network elements. According to this system architecture, all network elements need to be permanently connected to the network and they are all provided with an independent processing capability.

On the other hand it is known in the art the use of simple transponders (e.g. RFID Tags) for very limited purposes without an integrated system and without the possibility of sharing the single pieces of information collected on these entities. As an example EP1455550 discloses a network mapping system with a central processing unit having a central database and a plurality of palm electronic units connected to the central unit; these mobile units collects the information stored on terminal stations by means of a transponder coupled to each terminal station. However there is no interaction among the mobile units or even between mobile units and terminal stations, other than the simple unidirectional collection of information.

It would be highly desirable to provide for a network architecture which is able to integrate traditional network elements with data processing power and "non-intelligent" entities which could be a very helpful distributed and dynamic source of information.

### Summary of the Invention

According to the invention there is provided a system for managing a plurality of distributed entities according to claim 1.

In the invention we provide a method of managing a plurality of distributed entities according to claim 7

In another aspect of the present invention the proximity transceiver includes an RFID Tag.

In a further aspect of the invention the mobile data processing units are capable of communicating with each other in a peer-to-peer mode.

In another aspect of the invention the system comprises a task repository storing a plurality of predetermined tasks; the sequence of software instructions performed by the mobile data processing unit corresponds to one of the plurality of stored predetermined tasks and the information received from the detected entity includes a link to the task repository so that the sequence of instruction can be downloaded on the mobile data processing unit. Another possible option is that the information received from the detected entity contains a sequence of software instructions.

In yet another aspect of the present invention each mobile data processing unit is adapted to modify the information contained in the detected entity.

Also the sequence of software instructions can be an interactive software program.

In a further aspect of the present invention the mobile data processing units are provided with a positioning system for determining the position of the mobile data processing unit.

The present invention provides a computer program for performing the above described method according to claim 13.

Further embodiments of the invention are provided in the appended dependent claims.

### Brief description of the drawings

The invention itself, as well as further features and the advantages thereof, will be best understood with reference to the following detailed description, given purely by way of a non-restrictive indication, to be read in conjunction with the accompanying drawings, in which:
Figure 1 is a schematic block diagram of the system in which the method of the invention is applicable;
Figure 2 shows the functional blocks of a generic computer system used in the preferred embodiment of the invention;
Figure 3 shows the components of a system suitable for implementing the present invention;
Figure 4 shows a detail of a possible implementation of the present invention;
Figure 5 shows an additional possible implementation of the present invention;
Figure 6 shows a diagram describing the flow of activities relating to an illustrative implementation of the method.

### Detailed Description

One of the advantages of the method and system according to the preferred embodiment of the present invention is that existing structures could be exploited without the need of building a dedicated, complex and expensive infrastructure.

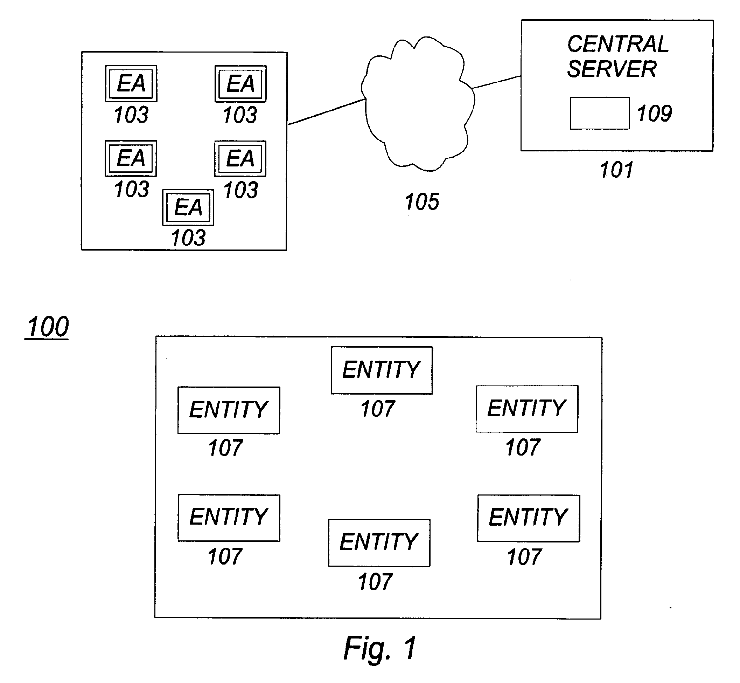

With reference in particular to Figure 1, a distributed system 100, according to a preferred embodiment of the present invention is depicted. The system 100 includes a server 101, connected to a plurality of mobile terminals 103 (e.g. personal computers, palm computers, mobile phone). Terminals 103 can communicate and exchange information with the server 101 through a network 105, but also among each other: according to a preferred embodiment of the present invention these communications are enabled by means of software agents, running on mobile devices and on the server, exchanging asynchronous messages. Such messages could be transported on a variety of networks (e.g. GPRS, UMTS, WiFi, Wimax, Bluetooth) and protocols (e.g. http). Each mobile terminal 103 is provided with the capability to intercept the proximity of entities 107 having potentially a limited processing capability; in a preferred embodiment of the present invention the entities are RFID Smart Tags, but other kind of entities with a proximity based transceiver operating on a proximity based communication protocol could be used instead (e.g. ZIGBee, Bluetooth). Each mobile terminal 103 is associated to at least one Explorer Agent which is adapted to exploit the capability of the mobile terminal in order to communicate with entities 107. The Explorer Agent is a software agent, i.e. an autonomous process provided with an identity, possibly a persistent one which is adapted to communicate with other agents in order to perform assigned tasks. This communication in a preferred embodiment of the present invention is implemented through the asynchronous exchange of messages and through adoption of a language (e.g. Agent Communication Language or ACL) with a predefined semantics which is commonly adopted within the platform. The server unit 101 can be a data processing unit and more generally any kind of data processing system capable of managing a plurality of distributed terminals. Also the server 101 is adapted to establish communication with terminals 103 by means of a network 105 as explained above. A central repository (e.g. a Cache) 109 is maintained by the server 101 where information collected by the mobile terminals 103 are stored and are made available to the plurality of mobile terminals 103. The entities 107 must be capable of transmitting information to the mobile terminals 103 when they are within a predetermined range. Each entity (e.g. an RFID Tag) 107 can be coupled to any physical object and provide information about such object or the category to which the object belongs. According to a preferred embodiment of the present invention the entities 107 are also adapted to store a workflow or a sequence of instructions within their own memory and to transmit such workflow to mobile terminals 103 when a communication is established. The Explorer Agents also include a Task Engine for interpreting and executing such workflows received by the entities 107. Also the mobile terminals, through the Explorer Agent, are capable of modifying the information contained in the entities 107. In a preferred embodiment of the present invention the mobile terminals are provided with a positioning system to be able to communicated the location of the detected entities to the server.

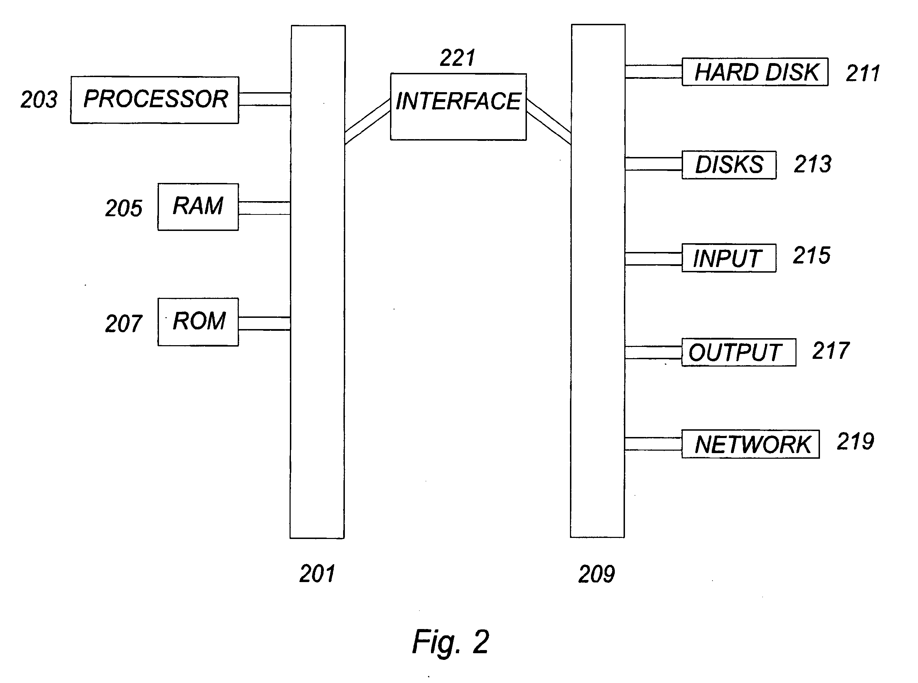

As shown in Figure 2, a generic computer of the system (e.g. mobile computer unit, central server, transmitter) is denoted with 200. The computer 200 is formed by several units that are connected in parallel to a system bus 201. In detail, one or more microprocessors 203 control operation of the computer 200; a RAM 205 is directly used as a working memory by the microprocessors 203, and a ROM 207 stores basic code for a bootstrap of the computer 200. Peripheral units are clustered around a local bus 209 (by means of respective interfaces). Particularly, a mass memory consists of a hard-disk 211 and a drive 213 for reading CD-ROMs. Moreover, the computer 200 includes input devices 215 (for example, a keyboard and a mouse), and output devices 217 (for example, a monitor and a printer). A Network Interface 219 is used to connect the computer 200 to the network: the network can be either a wired network or a wireless telecommunication network. An interface 221 puts in communication the system bus 201 with the local bus 209. Each microprocessor 203 and the interface unit 221 can operate as master agents requesting an access to the system bus 201 for transmitting information.

Similar considerations apply if the system has a different topology, or it is based on other networks. Alternatively, the computers have a different structure, include equivalent units, or consist of other data processing entities (such as PDAs, mobile phones, and the like).

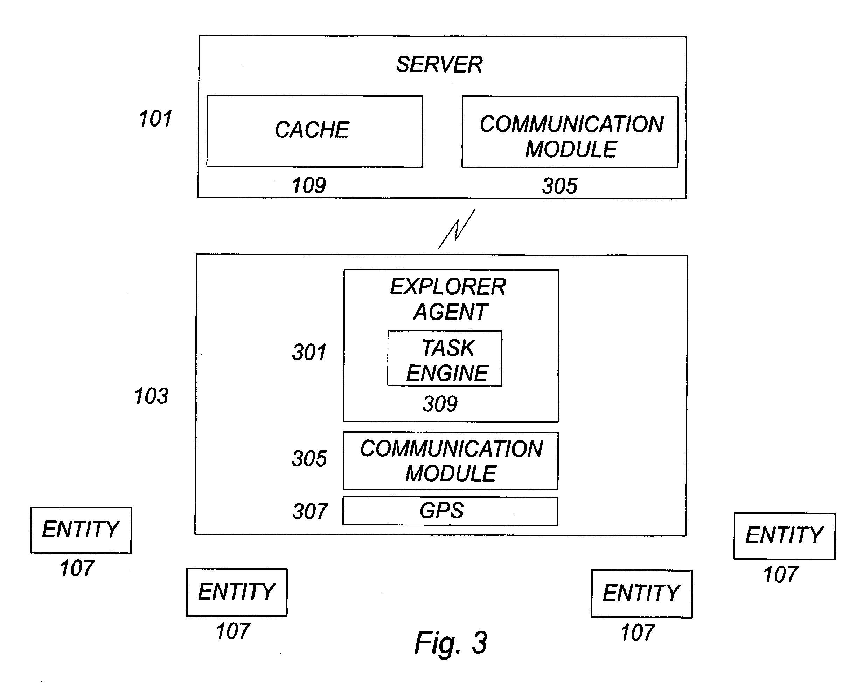

Figure 3 shows a system suitable for implementing the present invention with particular reference to one of the plurality of mobile terminal units 103 of Fig. 1. As shown in figure 3, each mobile terminal 103 can communicate with the server 101 by means of a wireless network (e.g. GSM, GPRS, UMTS, WiFi, Wimax); the terminal unit includes an Explorer Agent 301, typically a software agent running on the terminal unit, which is able to detect the proximity of an entity (e.g. an RFID Tag) and to establish a communication with such entity. Once an entity is detected the information contained in the entity can be transferred to the mobile terminal and possibly communicated to the server 101 by means of a communication module 305 in the mobile terminal and in the server 101 and stored in a cache 109. The server can then transmit such information to all connected mobile terminals or keep it for future use. Also all information received by the plurality of terminals could be elaborated and analyzed by the server 101 for e.g. creating statistics and for taking any actions which might become necessary according to the requirements of the system or according to the requests of the Explorer Agents associated to the mobile terminals. In an embodiment of the present invention, a positioning system 307 (e.g. a GPS satellite receiver) provides indication of the current position of the mobile terminal and, as a consequence, of the detected entity. In a preferred embodiment of the present invention the mobile terminal includes a Task Engine 309 which is able to receive, interpret and execute a workflow provided by the detected entity. The Task Engine 309 takes care of executing those tasks containing executing application specific logic. One of the aspects of the Task Engine is the capability of receiving execution steps which are out of the scope of a current task and create an amended (or extended) version of such task. This functionality of the Task Engine 309 allows the customization of basic tasks according to user preferences, user know-how and the specific environment. According to a preferred embodiment of the present invention the task Engine 309 also provides APIs to notify out-of-sequence steps, while the interception of such steps is application-specific and it is therefore left to the actual implementation. Also, since the architecture is addressed to open standard applications, Task Engine 309 supports a plug-in mechanism which allows the loading of modules written using different standards, e.g. XPDL, BPEL. The architecture only defines the interface which the plug-ins must comply with.

The above described capability of the entities of providing a task (e.g. a workflow) or a sequence of instructions to the mobile terminal and the capability of the terminal of interpreting and executing the task is a preferred feature of the present invention. In such way we can realize a distributed network with low cost components (the RFID Tags) having a very limited processing power and a very simple structure, leaving the processing to the more complex mobile terminals. A simplified embodiment of the invention would not require the entities 107 to provide a full workflow to the connected Explorer Agent 301, but rather an indication or a link to an existing workflow; a set of workflows could be maintained in a Task Repository (not shown) which could be stored on the mobile units 103 or on the Server 101. Another possible implementation is a combination of the two methods, i.e. the entity 107 only communicates deviations (i.e. additional or amended steps) from a predetermined task together with an indication of which task to execute and where to find it. A further possible implementation would be to transfer the sequence of operations to the server for execution or at least a portion of them.

According to an embodiment of the present invention the Explorer Agent has the capability not only to receive information from the entities 107 (i.e. to read) but also to modify existing information and procedures stored on the entities (i.e. to write). This requires of course that the entities are suitable to be modified. As an example, some kinds of RFID Tags have a memory which can be modified by authorized external users. This is an important additional feature of an embodiment according to the present invention: this allows the Explorer Agents to "adjust" and update information contained in the entities 107 so that future users (i.e. other Explorer Agents which will come into close proximity of that entity) can take advantage of the additional information. These amendments could be communicated to the Central Server to be stored in the central repository; alternatively, when the information has only a local relevance, it could be decided not to share the amendments with the whole community, but to leave it recorded only on the specific entity. Another possibility is to establish a direct connection with one or more of the other Explorer Agents of the network in a peer-to-peer mode. As mentioned above with reference to Fig 1 the Explorer Agent is adapted to communicate with other similar agents in order to perform assigned tasks. In some cases it might be required that two or more agents are put into communication among them: e.g. for exchanging information or for performing a task which the first Explorer Agent is not able to perform. In order for this communication to be established it is necessary that all the agents are using the same language to communicate with one each other (e.g. Agent Communication Language). In this way an Explorer Agent can access all entities which are in close proximity with any other agent with which a communication is established.

Also it must be noted that the Explorer Agents can be of several different kinds according to the requirements of the system and also according to the kind of mobile terminal where they are installed: just as an example mobile terminals could be sort of personal devices (e.g. handheld computer) or they could be e.g. mounted on vehicles.

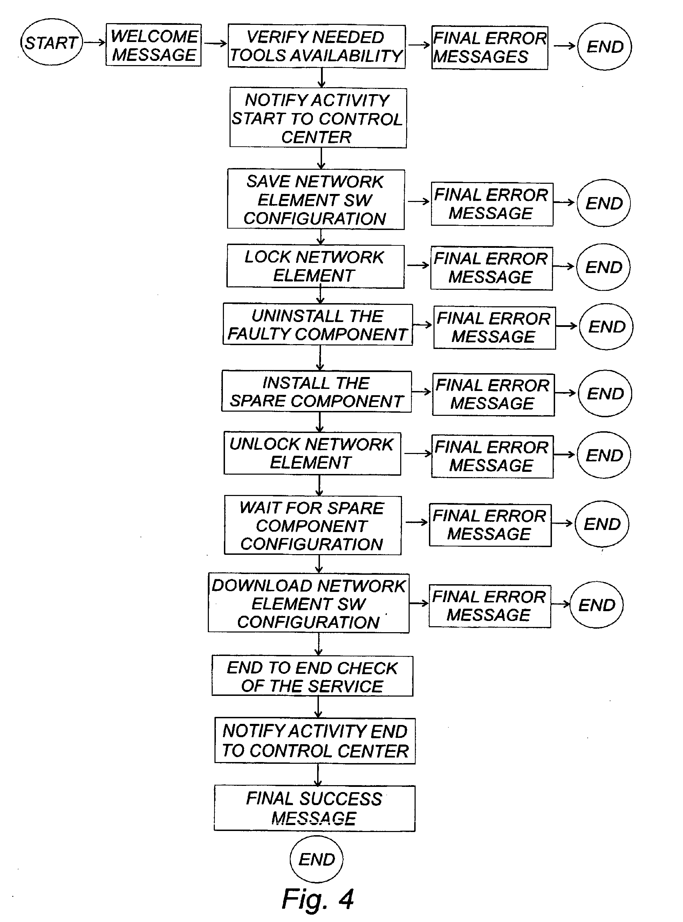

Figure 4 represents a workflow which could be used in a specific implementation of the present invention. The above described platform may be exploited as an example to automatically manage spare components used to maintain geographically distributed equipments; a typical application environment is a Telco Provider that has to maintain network equipments by using spare components (e.g. network cards, power supply cards), that can be available in the different warehouses of the Provider or assigned to field technicians in charge of maintenance activities.

Each spare component is provided with an RFID Tag with Read/Write/Re-Write capabilities; the RFID Tag is used to store both main information on spare component itself (e.g. type, model, manufacturing date, data related to the last maintenance activity) and the operational procedure to be accomplished when using the spare component in a maintenance activity. Network elements, on which spare components have to be installed, are provided with an RFID Tag too; this tag is used to store operational procedures, related to the installation of equipment components. If the RFID Tag has a limited storage capacity, the tag is used to store a link to a site from which operational procedures can be downloaded.

The workflow of Fig. 4 is an example of an operational procedure stored in an RFID Tag of a spare component; the boxes "Lock network element", "Unlock network element" and "End to end check of the service" represent automatic interactions between the procedure and external systems (e.g. Operational Support System).

Field technicians of the Telco Provider are equipped with a mobile device, like a cellular phone, a PDA or a laptop, and with an RFID reader with read/write capabilities, that is integrated in the device or is able to communicate with the device.

The RFID Tag of each spare component maintains both main information related to the spare component and the operational procedure to be accomplished when using the spare component in a maintenance activity.

Similarly the RFID Tag of each network element maintains the operational procedures to be executed to install network element components and a brief description of each procedure (for example to specify the type and model of component to which a given procedure applies, the identification of the technician who stored the procedure).

The Explorer Agents are running on the mobile devices of the field technicians and they are able to communicate with RFID readers.

Furthermore the scenario comprises:
- a centralized cache, where there is both a copy of the information locally stored on the RFID Tags of the spare components and more detailed information related to the spare components managed by the platform (like the identification of the Explorer Agent running on the mobile device of the technician to which a spare component of a given type and model is assigned to);
- a Task Repository, that stores the description of the operational procedures related to the spare components;
- an Access Authorization and Tracing Service, used to verify the access rights of the technicians that use the Explorer Agent running on their mobile devices and to log the activities carried out;
- a Localization Service, used to locate the Explorer Agent running on the mobile devices.

The activities carried out by an Explorer Agent can be assigned to one of the following categories:
- finding of a spare component assigned to another technician;
- usage of a spare component.

### Finding of a spare component assigned to another technician

When a technician has to substitute a network element component and he is not equipped with the required component, he tries to get this component from another technician. The following procedure specifies the activities to be done:
- the Explorer Agent, running on the mobile device of the technician, finds the nearest colleague equipped with the required component, by using the information stored in the cache and the Location functionality provided by the platform;
- the Explorer Agent, running on the mobile device of the technician, starts a peer-to-peer cooperative session with the Explorer Agent of the nearest colleague and verifies whether the required component is available;
- if the colleague cannot provide the required component, the Explorer Agent repeats the search of the next nearest colleague. The procedure is repeated until a positive outcome is obtained or until a predefined threshold, related to the number of trial, is reached;
- when a positive outcome is obtained, the data related to the identified colleague, are presented on the GUI of the mobile device of the technician; the technician may then contact the colleague (e.g. by means of SMS or phone call) and agree with him how to get the component;
- after the delivery of the component to the technician, the Explorer Agent, running on the mobile device of the technician, updates the data, stored in the cache, related to the delivered component (for example the identification of the technician to which the component is assigned to, the identification of the Explorer Agent running on the mobile device of that technician). The update activity ends the procedure to find a spare component assigned to another technician.

### Usage of a spare component

When the spare component, required for a maintenance activity, is found, the Explorer Agent could drive the technician during maintenance activity. The following procedure specifies the activities to be done:
- the technician reaches the site of the network element where the maintenance activity is needed and then requires the Explorer Agent, running on his mobiie device, to find an installation procedure specific for that spare component to be installed;
- the Explorer Agent, by using the RFID reader, reads, from the RFID Tag of the spare component, the data about type and model of the component and the generic installation procedure for the spare component itself;
- afterwards the Explorer Agent, by using the RFID reader, reads, from the RFID Tag of the network element all procedures useful to install that spare component on that network element;
- the Explorer Agent shows on the GUI of the mobile device of the technician the list of procedures to guide the maintenance activity, by including both procedures found on the RFID Tag of the network element and the generic one read from the RFID Tag of the spare component. Then the Explorer Agent asks the technician to select the procedure to be started;
- if the RFID Tags have limited storage capacity, they do not store the procedures, but only a link to the procedures; in this case the Explorer Agent downloads the procedures by following that link.

The technician may decide at any time to interrupt the guided procedure and may also decide to record a variation of the procedure: this variation is stored by the Explorer Agent, by using the RFID reader, on the RFID Tag of the network element (or on the site to which the link, stored in that RFID Tag, refers) and, if necessary, is also deployed to other interested network elements (e.g. network element with the same software release).

As an additional example we could also consider the following two scenarios.

In the first scenario, when the technician performs the final check of the service he detects an error, so he tries to solve the problem by resetting the component and finally he succeeds. Therefore he modifies the operational procedure and stores the new one on the RFID Tag of the network element, by using the Explorer Agent. Furthermore, since he noticed that the software release was an old one and that the problem was due to that old release, he requires the Explorer Agent to store the procedure description in the Task Repository, as the procedure may apply also to other network elements with the same old software release. The procedure is then downloaded to the other Explorer Agents and when they are near to a network element with the same software release to which the modified procedure applies, they store the procedure on the RFID Tag of the network element itself.

In the second additional scenario the technician knows that a very important business customer is connected to the network element and that he must contact this customer before doing any activity on the network element that may cause a problem to the customer. As he notices that the procedure does not warn to contact the customer he modifies the procedure by adding an alert for the technician. The modified procedure is then stored on the RFID Tag of the network element, by using the Explorer Agent; in this way the new procedure will be available to guide next technicians who will operate on that network element. As the procedure only applies to that particular network element, it is not stored on the RFID Tags of other network elements.

It should be noted that in both scenarios described above the Explorer Agent runs the operational procedure, showed in Figure 4, to guide a technician for installing a spare component (e.g. a network card).

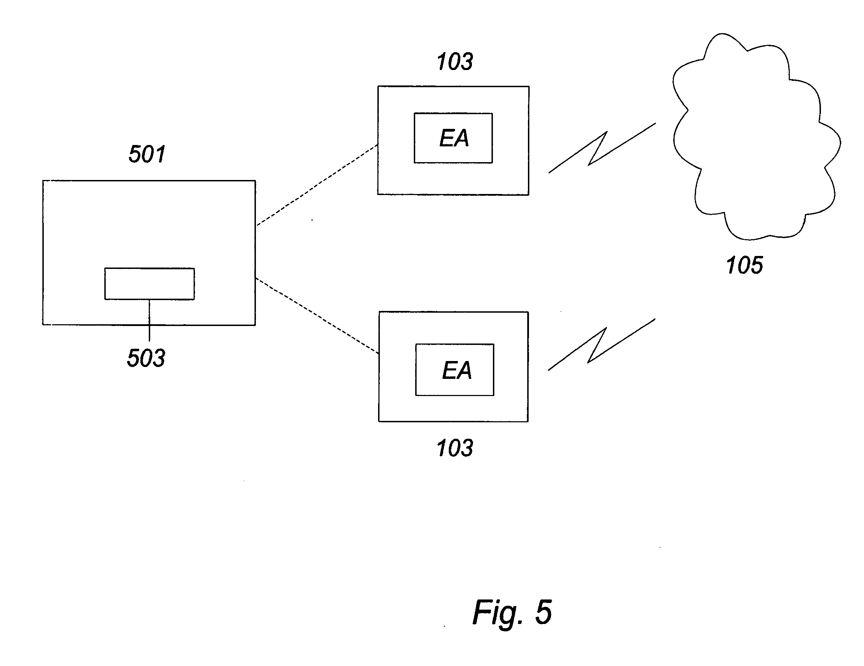

Figure 5 represents another possible implementation of the present invention. As mentioned, one of the main characteristics of the presented architecture is the ability of Explorer Agents 301 associated with mobile units 103 to deal with information that does not represent just data, but describe tasks and procedures. When detecting such information an Explorer Agent is able to execute the described procedure on the fly, thus providing, for instance, interactive support to a user and offering step by step guidance in complex activities. More in details having a workflow representation of a procedure and a proactive agent executing it when needed and providing at each step only the relevant information is extremely more friendly from the user point of view, with respect to a plain representation of the same procedure. The textual description of all the possible alternatives and the choice criteria to be applied in the different steps can make the procedure hardly understandable as long as its complexity grows. Furthermore the architecture allows personalizing the procedures interpreted by Explorer Agents when they do not prove to be suitable to the user, the location and in general the context they are executed in. Personalized procedures can then be made accessible to other users with similar profiles or operating in similar contexts. The following "Interactive Recipe" application provides a practical example of the described concepts. It is applied in the field of food products which need some guidance on the way of using them (i.e. cooking): such guidance can be of very different levels according to the experience of the user. The information is contained in a RFID Tag 503 associated to a physical object 501 (e.g. a pack of pasta) and it is transferred to mobile unit 103 where it is processed by the Explorer Agent.

### DETAILED EXAMPLE

Giovanni is buying some pasta in a shop. Giovanni sees on the back of the pack the recipe to cook the "Pasta alla Norma", a well known Italian pasta recipe with fried aubergines, tomato and cheese which Giovanni likes very much. The recipe includes the ingredients and a description of the steps and cooking times. Of course, also taking into account the limited space on the pasta pack, the description can be quite vague and it is not suitable for people with no cooking experience at all, as Giovanni is. When back home, Giovanni activates his personal agent running on his mobile phone and makes it read a small RFID Tag placed on the pasta pack just below the recipe. The tag contains the "Pasta alla Norma" recipe specified in the form of a workflow which the personal agent is able to interpret and execute. Following the workflow, the personal agent guides Giovanni through the steps necessary to prepare "Pasta alla Norma" in a definitely more detailed and friendly way. For instance, when instructed to "brown the onion", Giovanni can click on a "details" button that explains what browning onions mean and how to do that. Furthermore, the workflow can be structured in such a way to get inputs from the user about the appearance of the onion and, on the basis of that and of the elapsed time, suggest him to turn the temperature up or down. Auxiliary parts of the process, such as the details on browning onions could be stored in the tag together with the recipe main workflow or more likely downloaded on the fly by Giovanni's personal agent from a remote repository.

Unlike Giovanni, Tiziana likes cooking very much and has a lot of experience in this field. She does not need a very detailed guide as required by Giovanni. Her personal agent therefore can directly skip all unnecessary suggestions and just present the main steps of the recipe. Furthermore, as many expert cookers, Tiziana likes personalizing recipes by adding new ingredients, varying their quantities and so on. Having tested that adding some green pepper to "Pasta alla Norma" improves, in her opinion, the result, Tiziana notifies the modification to her personal agent. The latter, on its turn, elaborates a new personalized version of "Pasta alla Norma" recipe workflow to take Tiziana's input into account and publishes it so that it becomes accessible to other users. This may happen by uploading the personalized workflow on the central Task Repository or by storing it locally on the mobile unit to be shared with other mobile units according to peer-to-peer systems. When Fabrizio whishes to cook "Pasta alla Norma" too, he will activate his personal agent which, by means of proper profile matching mechanisms, will be able to present Tiziana's version of the recipe as weii as the original one depending on which one better suits Fabrizio.

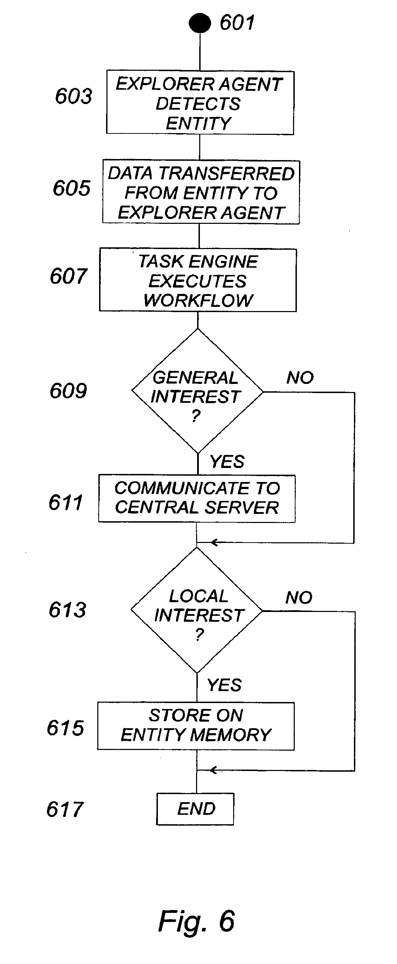

With reference to figure 6, the logic flow of a method according to an embodiment of the invention is illustrated with a diagram. The method is described with reference to the operations of an Explorer Agent installed on a mobile unit. The method begins at the black start circle 601. Continuing to block 603, the Explorer Agent detects the presence of an entity and establishes a communication session, e.g. by means of RFID protocol and an RFID Tag associated to the entity. Data are then transmitted from the entity to the mobile unit (step 605) and the Task Engine included in the Explorer Agent can perform the workflow being received from the entity. According to the present example, a complete workflow is received by the Explorer Agent, however other structures could be implemented instead, as discussed above, e.g. the entity could simply communicate a link to a predetermined workflow stored on a Task Repository. Then the process goes to step 609; if the information and the procedure are of a general interest, they are communicated to the Central Server (step 611) which could decide to re-transmit the information to the plurality of connected Explorer Agents or to a subset of them. On the local side, it is possible that the Explorer Agent decides to update the local information on the entity for future use by other Explorer Agent. The amendment of the information contained in the entity is possible if the entity allows write operation. In the present example the entity is associated to a Smart RFID Tag which offers this opportunity. Those skilled in the art will appreciate that the method described above is only an example and many changes, additions and alternatives can be implemented, e.g. in the way the information and the procedures are transmitted, processed and executed.

The invention or part of it can take the form of an entirely hardware embodiment, an entirely software embodiment or an embodiment containing both hardware and software elements. In a preferred embodiment, part of the invention is implemented in software, which includes but is not limited to firmware, resident software, microcode, etc.

Furthermore, the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk-read/write (CD-R/W) and DVD.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including but not limited to keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modem and Ethernet cards are just a few of the currently available types of network adapters.

## Claims

1. A system for managing a plurality of distributed entities, (107) each entity being associated to a proximity based transceiver and being adapted to store software instructions, the system comprising:
a plurality of mobile data processing units (103) being connectable to a server unit by means of telecommunication network, each mobile data processing unit including a proximity based transceiver and being adapted to detect the presence of distributed entities, when the distance is within a predetermined threshold, and to exchange information with the detected entity;
wherein each mobile data processing unit includes a task engine for executing software programs and is adapted to receive a sequence of software instructions from the detected entity and to perform a software program including the sequence of software instructions received from the detected entity and wherein each mobile data professing unit is adapted to modify the information contained in the detected entity, allowing a user of the mobile data processing unit to modify the sequence of software instructions, so that a customised version of the sequence is stored in the detected entity.

2. The system of claim 1 wherein at least one of the entities includes an RFID Tag.

3. The system of any preceding claim wherein at least one of the plurality of mobile data processing unit is adapted to communicate in a peer-to-peer mode with at least another one of the plurality of mobile data processing units.

4. The system of any preceding claim further comprising a task repository storing a plurality of predetermined tasks and wherein the software program includes one of the plurality of stored predetermined tasks and the information received from the detected entity includes a link to the task repository so that at least part of software program can be downloaded on the mobile data processing unit.

5. The system of any preceding claim, wherein the sequence of software instructions is an interactive software program.

6. The system of any preceding claim wherein each mobile data processing unit includes a positioning system for determining the position of the mobile data processing unit.

7. A method of managing a plurality of distributed entities (107) by means of a system including a plurality of mobile data processing units (103) each entity being associated to a proximity based transceiver and being adapted to store software instructions, each mobile data processing unit including a proximity based transceiver, and being adapted to modify the information contained in a detected entity, and being connectable to a server data processing unit, the method comprising the following steps:
- a first mobile data processing unit detecting the proximity of at least one of the plurality of distributed entities;
- establishing a communication session between the first mobile data processing unit and the detected entity;
- the first mobile data processing unit receiving information from the detected entity, the information comprising a sequence of software instructions;
- the first mobile data processing unit performing, through a task engine, a software program including the sequence of software instructions received from the detected entity; and
responsive to a user selection, the first mobile data processing unit modifying the sequence of software instructions contained in the detected entity.

8. The method of claim 7 wherein at least one of the entities includes an RFID Tag.

9. The method of any of claims 7 or 8 wherein the first mobile data processing unit is adapted to communicate in a peer-to-peer mode with at least a second mobile data processing unit and information received by the detected entity is communicated to the at least second data processing unit.

10. The method of any of claims 7 to 9 further comprising the step of maintaining a task repository storing a plurality of predetermined tasks and wherein the software program includes one of the plurality of stored predetermined tasks and the information received from the detected entity includes a link to the task repository so that at least part of the software program can be downloaded on the mobile data processing unit.

11. The method of any of claims 7 to 10, wherein the sequence of software instructions is an interactive software program.

12. The method of any of claims 7 to 11 wherein the mobile data processing unit includes a positioning system and the method includes the further step of:
- responsive to the detection by the first mobile data processing unit of the proximity of at least one of the plurality of distributed entities, determining the position of the mobile data processing unit.

13. A computer program comprising instructions for carrying out the steps of the method according to any of claim 7 to 12 when said computer program is executed on a computer.

## Patentansprüche

1. Ein System zum Verwalten einer Vielzahl von verteilten Entitäten (107), wobei jede Entität mit einem proximitätsbasierten Transceiver assoziiert ist und angepasst ist, um Softwareanweisungen zu speichern, wobei das System Folgendes beinhaltet:
eine Vielzahl von mobilen Datenverarbeitungseinheiten (103), die mittels eines Telekommunikationsnetzes an eine Servereinheit angeschlossen werden können, wobei jede mobile Datenverarbeitungseinheit einen proximitätsbasierten Transceiver umfasst und angepasst ist, um die Gegenwart von verteilten Entitäten zu erfassen, wenn der Abstand innerhalb eines vorbestimmten Schwellenwerts liegt, und um mit der erfassten Entität Informationen auszutauschen;
wobei jede mobile Datenverarbeitungseinheit eine Aufgabenmaschine zur Ausführung von Softwareprogrammen umfasst und angepasst ist, um eine Sequenz von Softwareanweisungen von der erfassten Entität zu empfangen und ein Softwareprogramm, umfassend die Sequenz von Softwareanweisungen, die von der erfassten Entität empfangen wurden, durchzuführen, und wobei jede mobile Datenverarbeitungseinheit angepasst ist, um die in der erfassten Entität enthaltenen Informationen zu modifizieren, um es einem Benutzer der mobilen Datenverarbeitungseinheit zu ermöglichen, die Sequenz von Softwareanweisungen zu modifizieren, so dass eine benutzerspezifische Version der Sequenz in der erfassten Entität gespeichert wird.

2. System gemäß Anspruch 1, wobei mindestens eine der Entitäten ein RFID-Identifizierungskennzeichen umfasst.

3. System gemäß einem vorhergehenden Anspruch, wobei mindestens eine der Vielzahl von mobilen Datenverarbeitungseinheiten angepasst ist, in einem Peer-to-Peer-Modus mit mindestens einer anderen der Vielzahl von mobilen Datenverarbeitungseinheiten zu kommunizieren.

4. System gemäß einem vorhergehenden Anspruch, das ferner einen Aufgaben-Verwahrungsort beinhaltet, der eine Vielzahl von vorbestimmten Aufgaben speichert, und wobei das Softwareprogramm eine der Vielzahl von gespeicherten vorbestimmten Aufgaben umfasst und die von der erfassten Entität empfangenen Informationen eine Verbindung zu dem Aufgaben-Verwahrungsort umfassen, damit mindestens ein Teil des Softwareprogramms auf die mobile Datenverarbeitungseinheit heruntergeladen werden kann.

5. System gemäß einem vorhergehenden Anspruch, wobei die Sequenz von Softwareanweisungen ein interaktives Softwareprogramm ist.

6. System gemäß einem vorhergehenden Anspruch, wobei jede mobile Datenverarbeitungseinheit ein Positionierungssystem zum Bestimmen der Position der mobilen Datenverarbeitungseinheit umfasst.

7. Ein Verfahren zum Verwalten einer Vielzahl von verteilten Entitäten (107) mittels eines Systems, das eine Vielzahl von mobilen Datenverarbeitungseinheiten (103) umfasst, wobei jede Entität mit einem proximitätsbasierten Transceiver assoziiert ist und angepasst ist, um Softwareanweisungen zu speichern, wobei jede mobile Datenverarbeitungseinheit einen proximitätsbasierten Transceiver umfasst und angepasst ist, um die in einer erfassten Entität enthaltenen Informationen zu modifizieren, und an eine Serverdatenverarbeitungseinheit anschließbar ist, wobei das Verfahren die folgenden Schritte beinhaltet:
- Erfassen, durch eine erste mobile Datenverarbeitungseinheit, der Nähe von mindestens einer der Vielzahl von verteilten Entitäten;
- Aufbauen einer Kommunikationssitzung zwischen der ersten mobilen Datenverarbeitungseinheit und der erfassten Entität;
- Empfangen, durch die erste mobile Datenverarbeitungseinheit, von Informationen von der erfassten Entität, wobei die Informationen eine Sequenz von Softwareanweisungen beinhalten;
- Durchführen, durch die erste mobile Datenverarbeitungseinheit, mittels einer Aufgabenmaschine, eines Softwareprogramms, umfassend die Sequenz von Softwareanweisungen, die von der erfassten Entität empfangen wurden; und
Modifizieren, durch die erste mobile Datenverarbeitungseinheit, als Reaktion auf eine Benutzerauswahl, der in der erfassten Entität enthaltenen Sequenz von Softwareanweisungen.

8. Verfahren gemäß Anspruch 7, wobei mindestens eine der Entitäten ein RFID-Identifizierungskennzeichen umfasst.

9. Verfahren gemäß einem der Ansprüche 7 oder 8, wobei die erste mobile Datenverarbeitungseinheit angepasst ist, in einem Peer-to-Peer-Modus mit mindestens einer zweiten mobilen Datenverarbeitungseinheit zu kommunizieren, und von der erfassten Entität empfangene Informationen auf die mindestens zweite mobile Datenverarbeitungseinheit übermittelt werden.

10. Verfahren gemäß einem der Ansprüche 7 bis 9, das ferner den Schritt des Aufrechterhaltens eines Aufgaben-Verwahrungsorts beinhaltet, der eine Vielzahl von vorbestimmten Aufgaben speichert, und wobei das Softwareprogramm eine der Vielzahl von gespeicherten vorbestimmten Aufgaben umfasst und die von der erfassten Entität empfangenen Informationen eine Verbindung zu dem Aufgaben-Verwahrungsort umfassen, damit mindestens ein Teil des Softwareprogramms auf die mobile Datenverarbeitungseinheit heruntergeladen werden kann.

11. Verfahren gemäß einem der Ansprüche 7 bis 10, wobei die Sequenz von Softwareanweisungen ein interaktives Softwareprogramm ist.

12. Verfahren gemäß einem der Ansprüche 7 bis 11, wobei die mobile Datenverarbeitungseinheit ein Positionierungssystem umfasst und das Verfahren den folgenden weiteren Schritt umfasst:
- Bestimmen, als Reaktion auf die Erfassung der Nähe von mindestens einer der Vielzahl von verteilten Entitäten durch die erste mobile Datenverarbeitungseinheit, der Position der mobilen Datenverarbeitungseinheit.

13. Ein Computerprogramm, das Anweisungen zum Ausüben der Schritte des Verfahrens gemäß einem der Ansprüche 7 bis 12 beinhaltet, wenn das Computerprogramm auf einem Computer ausgeführt wird.

## Revendications

1. Un système de gestion d'une pluralité d'entités distribuées (107), chaque entité étant associée à un émetteur-récepteur basé à proximité et étant conçue pour stocker des instructions logicielles, le système comprenant :
une pluralité d'unités de traitement de données mobiles (103) pouvant être connectées à une unité serveur au moyen d'un réseau de télécommunication, chaque unité de traitement de données mobile incluant un émetteur-récepteur basé à proximité et étant conçue pour détecter la présence d'entités distribuées, lorsque la distance est en deçà d'un seuil prédéterminé, et pour échanger une information avec l'entité détectée ;
dans lequel chaque unité de traitement de données mobile inclut un moteur de tâches destiné à exécuter des programmes informatiques et est conçue pour recevoir une séquence d'instructions logicielles de l'entité détectée et pour réaliser un programme informatique incluant la séquence d'instructions logicielles reçue de l'entité détectée et dans lequel chaque unité de traitement de données mobile est conçue pour modifier l'information contenue dans l'entité détectée, permettant à un utilisateur de l'unité de traitement de données mobile de modifier la séquence d'instructions logicielles, de sorte qu'une version personnalisée de la séquence est stockée dans l'entité détectée.

2. Le système de la revendication 1 dans lequel au moins une des entités inclut une étiquette RFID.

3. Le système de n'importe quelle revendication précédente dans lequel au moins une unité parmi la pluralité d'unités de traitement de données mobiles est conçue pour communiquer en mode poste-à-poste avec au moins une autre unité parmi la pluralité d'unités de traitement de données mobiles.

4. Le système de n'importe quelle revendication précédente comprenant en sus un référentiel de tâches stockant une pluralité de tâches prédéterminées et dans lequel le programme informatique inclut une tâche parmi la pluralité de tâches prédéterminées stockées et l'information reçue de l'entité détectée inclut un lien vers le référentiel de tâches de sorte qu'au moins une partie du programme informatique puisse être téléchargée sur l'unité de traitement de données mobile.

5. Le système de n'importe quelle revendication précédente, dans lequel la séquence d'instructions logicielles est un programme informatique interactif.

6. Le système de n'importe quelle revendication précédente dans lequel chaque unité de traitement de données mobile inclut un système de positionnement destiné à déterminer la position de l'unité de traitement de données mobile.

7. Un procédé de gestion d'une pluralité d'entités distribuées (107) au moyen d'un système incluant une pluralité d'unités de traitement de données mobiles (103), chaque entité étant associée à un émetteur-récepteur basé à proximité et étant conçue pour stocker des instructions logicielles, chaque unité de traitement de données mobile incluant un émetteur-récepteur basé à proximité, et étant conçue pour modifier l'information contenue dans une entité détectée, et pouvant être connectée à une unité de traitement de données serveur, le procédé comprenant les étapes suivantes :
- la détection par une première unité de traitement de données mobile de la proximité d'au moins une entité parmi la pluralité d'entités distribuées ;
- l'établissement d'une session de communication entre la première unité de traitement de données mobile et l'entité détectée ;
- la réception par la première unité de traitement de données mobile d'une information provenant de l'entité détectée, l'information comprenant une séquence d'instructions logicielles ;
- la réalisation par la première unité de traitement de données mobile, par le biais d'un moteur de tâches, d'un programme informatique incluant la séquence d'instructions logicielles reçue de l'entité détectée ; et
- en réponse à une sélection utilisateur, la modification par la première unité de traitement de données mobile de la séquence d'instructions logicielles contenue dans l'entité détectée.

8. Le procédé de la revendication 7 dans lequel au moins une des entités inclut une étiquette RFID.

9. Le procédé de n'importe lesquelles des revendications 7 ou 8 dans lequel la première unité de traitement de données mobile est conçue pour communiquer en mode poste-à-poste avec au moins une deuxième unité de traitement de données mobile et l'information reçue par l'entité détectée est communiquée à cette au moins deuxième unité de traitement de données.

10. Le procédé de n'importe lesquelles des revendications 7 à 9 comprenant en sus l'étape consistant à maintenir un référentiel de tâches stockant une pluralité de tâches prédéterminées et dans lequel le programme informatique inclut une tâche parmi la pluralité de tâches prédéterminées stockées et l'information reçue de l'entité détectée inclut un lien vers le référentiel de tâches de sorte qu'au moins une partie du programme informatique puisse être téléchargée sur l'unité de traitement de données mobile.

11. Le procédé de n'importe lesquelles des revendications 7 à 10, dans lequel la séquence d'instructions logicielles est un programme informatique interactif.

12. Le procédé de n'importe lesquelles des revendications 7 à 11 dans lequel l'unité de traitement de données mobile inclut un système de positionnement et le procédé inclut l'étape supplémentaire consistant :
- en réponse à la détection par la première unité de traitement de données mobile de la proximité d'au moins une entité parmi la pluralité d'entités distribuées, à déterminer la position de l'unité de traitement de données mobile.

13. Un programme informatique comprenant des instructions pour accomplir les étapes du procédé selon n'importe lesquelles des revendications 7 à 12 lorsque ledit programme informatique est exécuté sur un ordinateur.
